# EUROPÄISCHE PATENTSCHRIFT

(11) **EP 3 145 366 B1**
(45) Veröffentlichungstag und Bekanntmachung des Hinweises auf die Patenterteilung: **13.06.2018**
(21) Anmeldenummer: 15715660.5
(22) Anmeldetag: 16.03.2015
(51) Int. Cl.: A47F 3/04

(54) **MÖBELANTRIEB**
FURNITURE DRIVE
ENTRAÎNEMENT DE MEUBLE

(30) Priorität: 23.05.2014 AT 4022014
(43) Veröffentlichungstag der Anmeldung: 29.03.2017
(73) Patentinhaber: Julius Blum GmbH, 6973 Höchst (AT)
(72) Erfinder: GASSER, Ingo, 6973 Höchst (AT); KAMPL, Markus, 6850 Dornbirn (AT); TAZOL, Marion, 6971 Hard (AT)
(74) Vertreter: Torggler & Hofinger Patentanwälte
(86) Internationale Anmeldenummer: PCT/AT2015/000041
(87) Internationale Veröffentlichungsnummer: WO 2015/176082

(56) Entgegenhaltungen:
- EP-A1- 0 934 474
- WO-A1-2008/098563
- US-A1- 2010 026 152

## Beschreibung

Die vorliegende Erfindung bezieht sich auf einen Möbelantrieb zum Antreiben eines bewegbaren Möbelteiles mit den Merkmalen des Oberbegriffs des Patentanspruchs 1.

Im Weiteren betrifft die Erfindung eine Schubladenausziehführung mit einer an einem Möbelkorpus zu befestigenden Korpusschiene, zumindest einer relativ zur Korpusschiene verfahrbaren Ladenschiene und mit einem Möbelantrieb zum Bewegen der Ladenschiene, sowie eine Schublade mit einer Schubladenausziehführung der vorstehend genannten Art.

Derartige Möbelantriebe können entweder als Einzugsvorrichtung ausgebildet sein, wobei durch den federbeaufschlagten Mitnehmer ein bewegbar gelagertes Möbelteil in Form einer Klappe, einer Türe oder einer Schublade relativ zu einem Möbelkorpus in eine geschlossene Endlage einziehbar ist. Ebenso kann der Möbelantrieb als Ausstoßvorrichtung ausgebildet sein, wobei durch den federbeaufschlagten Mitnehmer ein bewegbar gelagertes Möbelteil ausgehend von einer geschlossenen Endlage in eine Offenstellung ausstoßbar ist. Um die für die Bewegung des bewegbaren Möbelteiles erforderliche Kraft bereitzustellen, benötigen die Schraubenfedern solcher Möbelantriebe einen relativ großen Bauraum.

Eine Öffnungs- und Schließvorrichtung für Schubkästen ist beispielsweise in der DE 20 2009 004 956 U1 gezeigt, wobei der Schubkasten durch einen ersten Kraftspeicher in Form einer Druckfeder ausgehend von einer Schließstellung in eine Offenstellung ausstoßbar und durch einen zweiten Kraftspeicher in Form einer Zugfeder in die geschlossene Endlage einziehbar ist.

In der WO 2008/098563 A1 ist eine Möbelantrieb für bewegbar gelagerte Möbelteile gezeigt, wobei ein mit dem Möbelteil lösbar koppelbarer Mitnehmer durch eine Zugfeder vorgespannt ist. Die Zugfeder ist um eine Umlenkrolle herumgeführt und umfasst zwei Bereiche mit unterschiedlichen Wicklungsdurchmessern bzw. unterschiedlichen Federsteifigkeiten. Ein erster Bereich der Zugfeder mit geringerem Wicklungsdurchmesser und höherer Federsteifigkeit wirkt dabei mit der Umlenkrolle zusammen, während ein zweiter Bereich der Zugfeder mit größerem Wicklungsdurchmesser und geringer Federsteifigkeit so angeordnet ist, dass dieser zweite Bereich die Umlenkrolle nicht berührt. Durch diese Maßnahme soll ein Bruch der Zugfeder weitgehend ausgeschlossen werden.

Aufgabe der vorliegenden Erfindung ist es, die Federkraft des Möbelantriebes zu erhöhen, wobei eine kompakte Bauweise des Möbelantriebes beibehalten werden soll.

Dies wird erfindungsgemäß durch die Merkmale des Patentanspruchs 1 gelöst. Weitere vorteilhafte Ausgestaltungen der Erfindung sind in den abhängigen Unteransprüchen angegeben.

Gemäß der Erfindung ist vorgesehen, dass der Windungsabschnitt entlang der Längsachse eine, vorzugsweise periodisch, alternierende Abfolge von Federwindungen mit größerem Durchmesser und Federwindungen mit kleinerem Durchmesser aufweist.

Mit anderen Worten können sich auf diese Weise die Windungen der Schraubenfeder zumindest teilweise überlappen, wodurch eine axiale Verkürzung der Schraubenfeder erreicht werden kann. Die Windungen der Schraubenfeder sind also zumindest teilweise ineinander anordenbar, wobei durch die alternierende Änderung des Durchmessers der Windungen zusätzliche Windungen bei gleicher Federlänge angeordnet werden können, da die Steigung der Schraubenfeder kleiner als der Drahtdurchmesser ausgebildet sein kann. Auf diese Weise kann die Federkraft bei gleicher Federlänge erhöht und der erforderliche Bauraum für die Schraubenfeder reduziert werden.

Eine Feder mit unterschiedlichen Windungsdurchmessern ist zwar in der WO 98/12450 A1 gezeigt, allerdings im Zusammenhang mit verschiedenen anderen Anwendungsgebieten.

Unter "Windungsabschnitt" ist jener Abschnitt der Schraubenfeder gemeint, welcher bei einer Bewegung des Mitnehmers zur Aufbringung einer Federkraft längenveränderlich ausgebildet ist. Der Windungsabschnitt umfasst somit nicht die beiden Endabschnitte der Schraubenfeder, die zur Befestigung der Schraubenfeder vorgesehen sind.

Unter "alternierender Abfolge" sind mindestens zwei - entlang der Längsachse der Schraubenfeder - aufeinanderfolgende Wechsel von Federwindungen mit größerem Durchmesser auf Federwindungen mit kleinerem Durchmesser (oder umgekehrt) zu verstehen.

Gemäß einem Ausführungsbeispiel der Erfindung kann vorgesehen sein, dass alternierend genau eine Federwindung mit größerem Durchmesser und genau eine Federwindung mit kleinerem Durchmesser aufeinanderfolgen. Durch das stetige Ändern des Federdurchmesser (dass also auf eine Windung mit größerem Durchmesser - vorzugsweise unmittelbar - eine Windung mit kleinerem Durchmesser und - vorzugsweise unmittelbar - daran wieder eine Windung mit größerem Durchmesser folgt, etc.) können sich die Windungen mit kleinerem Durchmesser über die Länge der Schraubenfeder jeweils zumindest teilweise innerhalb von Windungen größeren Durchmessers anordnen, wobei durch die Überlappung der Windungen auch eine erhöhte Federenergie gespeichert werden kann.

Dabei kann vorgesehen sein, dass die Windungen mit größerem Durchmesser jeweils einen konstanten Durchmesser und dass die Windungen mit kleinerem Durchmesser ebenfalls einen dazu reduzierten, aber ebenfalls konstanten Durchmesser aufweisen.

Die erfindungsgemäße Schubladenausziehführung ist durch wenigstens einen Möbelantrieb der beschriebenen Art gekennzeichnet. Hierbei kann vorgesehen sein, dass die Ladenschiene der Schubladenausziehführung gegen Ende der Schließbewegung mit dem Mitnehmer des Möbelantriebes lösbar kuppelbar und durch die Kraft der Schraubenfeder in die geschlossene Endlage ziehbar ist und/oder dass die Ladenschiene ausgehend von der geschlossenen Stellung über den Mitnehmer des Möbelantriebes und durch die Kraft der Schraubenfeder in eine Offenstellung ausstoßbar ist.

Weitere Einzelheiten und Vorteile der gegenständlichen Erfindung ergeben sich aus der nachfolgenden Figurenbeschreibung. Dabei zeigt bzw. zeigen:
- Fig. 1a, 1b: eine perspektivische Ansicht eines Möbels mit einem Möbelkorpus, wobei Schubladen über Schubladenausziehführungen relativ zum Möbelkorpus verfahrbar gelagert sind, sowie ein Ausführungsbeispiel eines Möbelantriebes in Form einer Einzugsvorrichtung in einer perspektivischen Ansicht,
- Fig. 2: eine perspektivische Ansicht eines Teilbereichs des in Fig. 1b gezeigten Möbelantriebes,
- Fig. 3a-3d: verschiedene Ansichten einer Schraubenfeder des Möbelantriebes,
- Fig. 4a, 4b: eine Schublade in einer perspektivischen Ansicht von unten mit einem Möbelantrieb in Form einer Ausstoßvorrichtung sowie eine vergrößerte Ansicht eines solchen Möbelantriebes,
- Fig. 5a-5c: mögliche Abfolgen von Federwindungen des Windungsabschnittes,
- Fig. 6a, 6b: mögliche Ausführungsformen der Endabschnitte der Schraubenfeder.

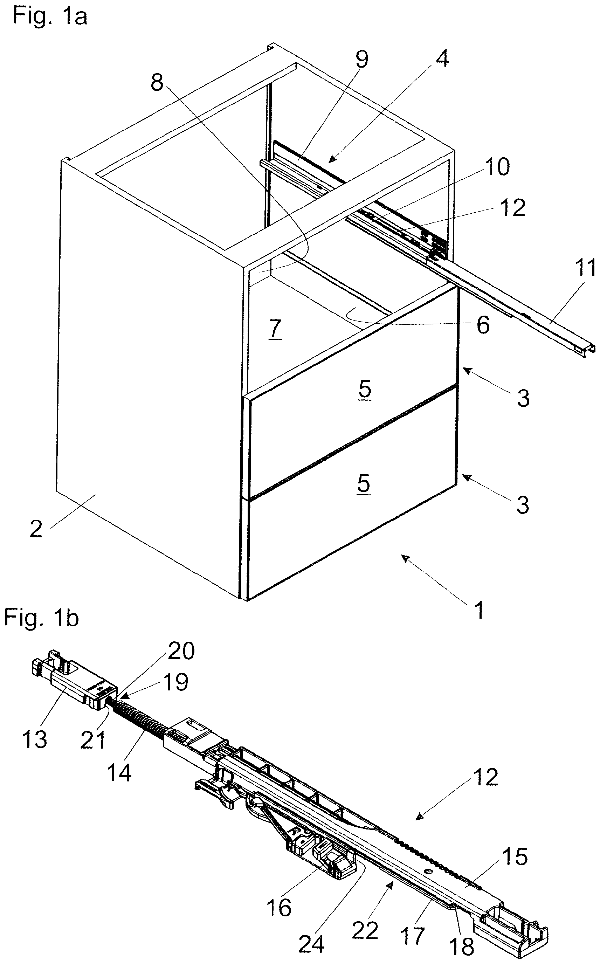

Fig. 1a zeigt ein Möbel 1 mit einem Möbelkorpus 2, wobei bewegbare Möbelteile 3 in Form von Schubladen über Schubladenausziehführungen 4 relativ zum Möbelkorpus 2 verfahrbar gelagert sind. Die Schubladen 3 umfassen jeweils eine Frontblende 5, Seitenwände 6, einen Schubladenboden 7 sowie eine Rückwand 8. Die Schubladenausziehführung 4 weist eine am Möbelkorpus 2 zu befestigende Korpusschiene 9 und eine an der Schublade 3 zu befestigende Ladenschiene 11 auf, zwischen denen eine auszugsverlängernde Mittelschiene 10 verschiebbar gelagert ist. Über einen an der Schubladenausziehführung 4 gelagerten Möbelantrieb 12 ist die Mittelschiene 10 und/oder die Ladenschiene 11 antreibbar. Hierbei kann vorgesehen sein, dass die Ladenschiene 11 (und damit die Schublade 3) durch den Möbelantrieb 12 in die geschlossene Endlage relativ zum Möbelkorpus 2 einziehbar und/oder dass die Schublade 3 durch den Möbelantrieb 12 ausgehend von einer geschlossenen Endlage in eine Offenstellung ausstoßbar ist.

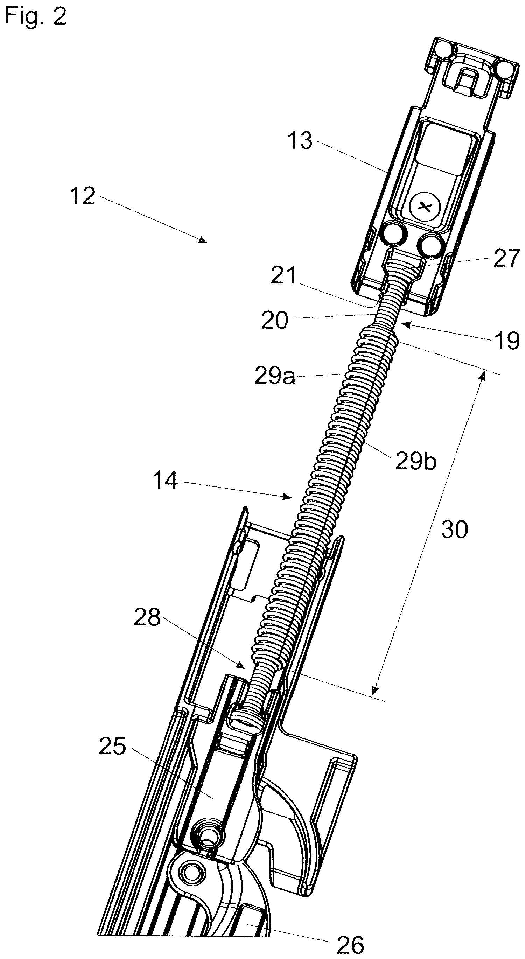

Fig. 1b zeigt eine mögliche Ausführungsform eines Möbelantriebes 12 zum Antreiben einer Schublade 3. Das Grundprinzip solcher Möbelantriebe 12 in der Funktion einer Einzugsvorrichtung ist seit langem bekannt (beispielsweise wie in der EP 391 221 B1 der Anmelderin beschrieben) und wurde vielfach weiterentwickelt, sodass die gezeigte Konstruktion lediglich als erläuterndes Ausführungsbeispiel zu verstehen ist. Der Möbelantrieb 12 weist ein an der Korpusschiene 9 zu befestigendes Lagerteil 13 auf, an welchem zumindest eine Schraubenfeder 14 zur Kraftbeaufschlagung eines relativ zum Gehäuse 15 verfahrbaren Mitnehmers 16 verankert ist. Zur Befestigung am Lagerteil 13 weist die Schraubenfeder 14 an zumindest einem Endabschnitt 19 einen verjüngten Abschnitt 20 auf, welcher durch eine Ausnehmung 21 des Lagerteiles 13 hindurchgeführt ist. An den verjüngten Abschnitt 20 schließt sich eine (hier nicht ersichtliche) Verdickung 27 der Schraubenfeder 14 an, die aufgrund des größeren Durchmessers nicht durch die Ausnehmung 21 des Lagerteiles 13 hindurchrutschen kann, sodass der Endabschnitt 19 der Schraubenfeder 14 fest mit dem Lagerteil 13 verbunden ist. Der andere Endabschnitt 28 (Fig. 2) der Schraubenfeder 14 greift - direkt oder indirekt - am Mitnehmer 16 an, welcher entlang einer Führung 22 des Gehäuses 15 bewegbar gelagert ist. Die Führung 22 weist einen linearen Verfahrweg 17 auf, an den sich ein abgebogener oder abgekanteter Abschnitt 18 anschließt. Der von der Schraubenfeder 14 beaufschlagte Mitnehmer 16 ist zwischen einer selbsthemmend arretierten Parkposition (in der die Schraubenfeder 14 gespannt ist) und einer Endlage (in der die Schraubenfeder 14 zumindest teilweise entspannt ist) entlang der Führung 22 bewegbar gelagert. In der gezeigten Figur befindet sich der Mitnehmer 16 in der besagten Endlage, in welcher die Schraubenfeder 14 entspannt ist. Der Mitnehmer 16 ist mit einem an der Ladenschiene 11 oder an der Schublade 3 befestigten Koppelzapfen lösbar koppelbar, sodass der Mitnehmer 16 ausgehend von der Endlage gemeinsam mit dem Koppelzapfen entlang des linearen Verfahrweges 17 in Öffnungsrichtung 23 bewegbar ist, wobei die Schraubenfeder 14 gespannt wird. Der Mitnehmer 16 weist ein Führungselement 24 auf, welches am Ende des linearen Verfahrweges 17 in den abgebogenen Abschnitt 18 einfährt, sodass der Mitnehmer 16 gekippt und der Koppelzapfen bzw. die Schublade 3 freigegeben wird. Der Mitnehmer 16 befindet sich in der gekippten Lage in einer selbsthemmend arretierten Parkstellung, in welcher die Schraubenfeder 14 gespannt ist. Beim Schließen der Schublade 3 kann der Koppelzapfen der Ladenschiene 11 den Mitnehmer 16 wieder aus der selbsthemmend arretierten Parkstellung herauslösen, woraufhin der mit dem Mitnehmer 16 gekoppelte Koppelzapfen bzw. die Schublade 3 durch die Kraft der Schraubenfeder 14 wieder in die vollständig geschlossene Endlage einziehbar ist. Der Mitnehmer 16 kann einteilig oder auch mehrteilig ausgebildet sein, beispielsweise in Form eines bewegbar gelagerten Schlittens, an dem ein Kippsegment zum lösbaren Koppeln mit dem Koppelzapfen beweglich gelagert ist.

Fig. 2 zeigt eine perspektivische Ansicht eines Teilbereichs des in Fig. 1b gezeigten Möbelantriebes 12. Das zur Befestigung der Schraubenfeder 14 vorgesehene Lagerteil 13 weist eine Ausnehmung 21 auf, durch welche der verjüngte Abschnitt 20 des Endabschnittes 19 hindurchgeführt ist. An den verjüngten Abschnitt 20 schließt sich eine Verdickung 27 an, sodass der Endabschnitt 19 relativ zum Lagerteil 13 durch Formschluss fixiert ist. Der zweite Endabschnitt 28 der Schraubenfeder 14 ist in einer analogen Weise an einem Schieber 25 fixiert, welcher entlang des Gehäuses 15 linear verschiebbar gelagert ist. Der Schieber 25 steht über einen Hebel 26 mit dem in Fig. 1b gezeigten Mitnehmer 16 gelenkig in Verbindung. Zur erkennen ist, dass die Schraubenfeder 15 einen von den Endabschnitten 19, 28 gesonderten Windungsabschnitt 30 aufweist, welcher Federwindungen 29a mit größerem Durchmesser und Federwindungen 29b mit kleinerem Durchmesser umfasst.

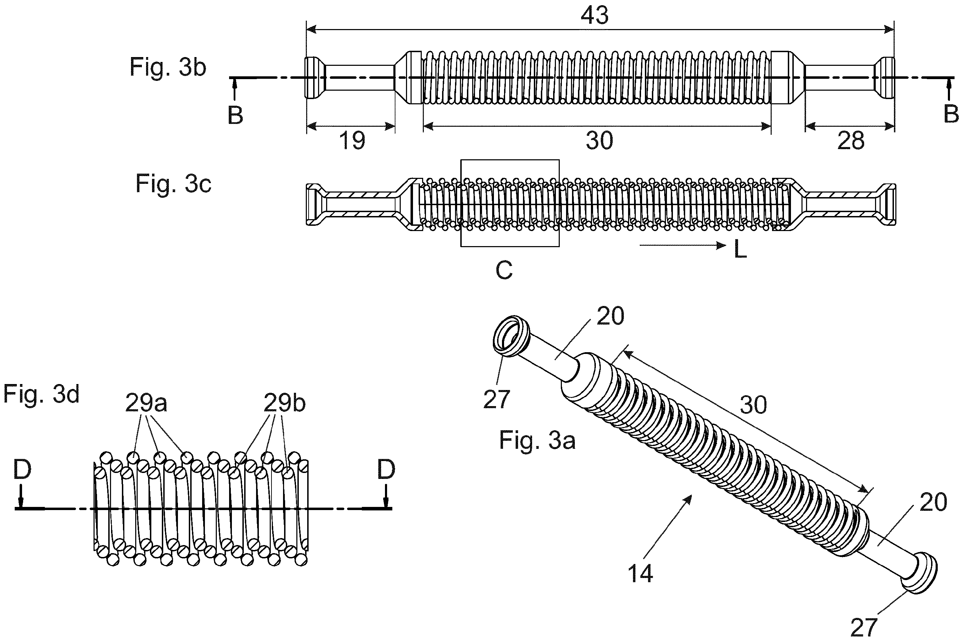

Fig. 3a-3e zeigen verschiedene Ansichten der Schraubenfeder 14. Fig. 3a zeigt eine perspektivische Ansicht der Schraubenfeder 14, welche einen zwischen zwei Endabschnitten 19, 28 angeordneten Windungsabschnitt 30 aufweist. An den beiden verjüngten Abschnitten 20 schließen sich jeweils Verdickungen 27 an, durch welche die Schraubenfeder 14 verankerbar ist.

Fig. 3b zeigt die Schraubenfeder 14 gemäß Fig. 3a in einer Seitenansicht. Bei der als Zugfeder ausgebildeten Schraubenfeder 14 können die Endabschnitte 19 und 28 - bezogen auf die Gesamtlänge 43 der Schraubenfeder 14 - eine Länge zwischen 3% und 15%, vorzugsweise zwischen 5% und 10%, der Gesamtlänge 43 aufweisen. Der Windungsabschnitt 30 kann - bezogen auf die Gesamtlänge 43 der Schraubenfeder 14 - eine Länge von mindestens 50%, vorzugsweise mindestens 60%, der Gesamtlänge 43 aufweisen. Gemäß einem Ausführungsbeispiel kann vorgesehen sein, dass der Windungsabschnitt 30 höchstens 80%, vorzugsweise höchstens 60%, der Gesamtlänge 43 der Schraubenfeder 14 beträgt.

Fig. 3c zeigt einen Querschnitt der Schraubenfeder 14 entlang der Ebene B-B gemäß Fig. 3b. Daraus ergibt sich, dass der Windungsabschnitt 30 aus mehreren miteinander seriell verbundenen Kegelfederabschnitten gebildet ist.

Fig. 3d zeigt den in Fig. 3c eingezeichneten Detailbereich C in einer vergrößerten Darstellung, wobei ersichtlich ist, dass der Windungsabschnitt 30 entlang der Längsachse (L) der Schraubenfeder 14 alternierend eine Federwindung 29a mit größerem Durchmesser mit einer darauf folgenden Federwindung 29b mit kleinerem Durchmesser aufweist. Die Federwindungen 29b mit kleinerem Durchmesser sind - in radialer Richtung gesehen - innerhalb der Federwindungen 29a mit größerem Durchmesser angeordnet. Auf diese Weise kann die Anzahl der Federwindungen 29a, 29b entlang der Längsachse (L) der Schraubenfeder 14 erhöht und damit die speicherbare Energie vergrößert werden. Somit erhält man einen Möbelantrieb 12 mit einer Schraubenfeder 14, welche im Vergleich zu Schraubenfedern 14 mit konstantem Windungsdurchmesser eine höhere Federkraft aufweist, wobei aber der axiale Bauraum zur Aufnahme der Schraubenfeder 14 nicht vergrößert werden muss. Die Schraubenfeder 14 ist als Zugfeder ausgebildet, wobei die Federwindungen 29a, 29b in Ruhelage aneinander liegen. Auch kann vorgesehen sein, dass zwischen zwei Federwindungen 29a mit größerem Durchmesser zumindest eine oder mehrere Gruppen von Federwindungen 29b mit kleinerem Durchmesser angeordnet sind.

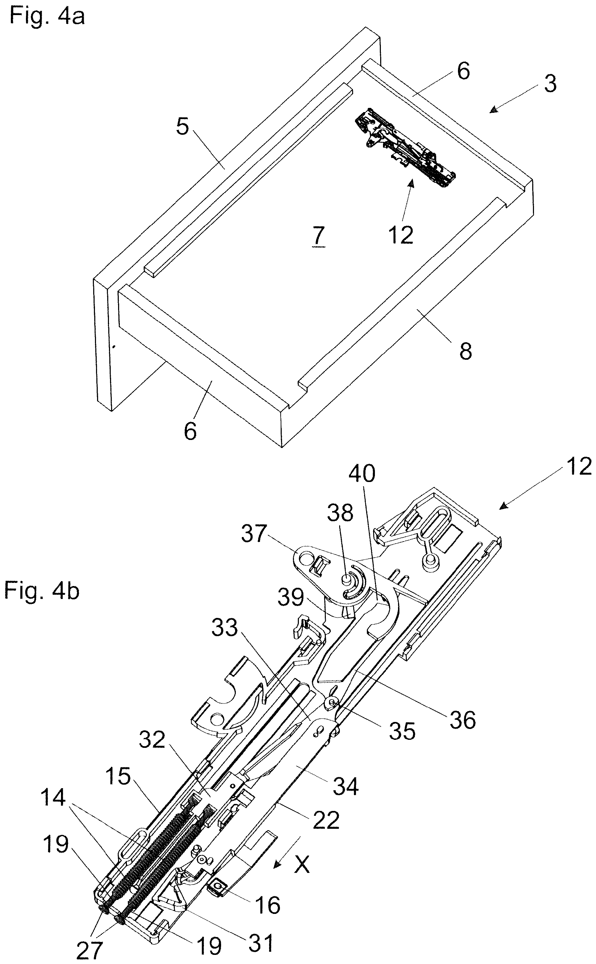

Fig. 4a zeigt eine Schublade 3 in einer Ansicht von unten, wobei der Möbelantrieb 12 in der Funktion einer Ausstoßvorrichtung ausgebildet ist, durch welche die Schublade 3 ausgehend von einer geschlossenen Endlage in eine Offenstellung ausstoßbar ist. Der Möbelantrieb 12 ist im gezeigten Ausführungsbeispiel an der Unterseite des Schubladenbodens 7 befestigt und weist einen von Schraubenfedern 14 beaufschlagbaren, beweglichen Mitnehmer 16 auf, welcher sich in der Schließstellung der Schublade 3 an einem (nicht gezeigten) Anschlagelement der Korpusschiene 9 der Schubladenausziehführung 4 (Fig. 1a) abstützt, sodass die Schublade 3 gemeinsam mit dem Möbelantrieb 12 relativ zur stationären Korpusschiene 9 in eine Offenstellung verfahrbar ist.

Fig. 4b zeigt den Möbelantrieb 12 gemäß Fig. 4a in einer vergrößerten Darstellung, wobei zwei parallel geschaltete Schraubenfedern 14 in Form von Zugfedern vorhanden sind, deren Endabschnitte 19 jeweils Verdickungen 27 zur Befestigung am Gehäuse 15 aufweisen. Die gegenüberliegenden Endabschnitte 28 der Schraubenfedern 14 greifen an einem relativ zum Gehäuse 15 linear verfahrbaren Ausstoßschlitten 32 an, welcher mit einem Steuerhebel 33 gelenkig verbunden ist. Am freien Ende des Steuerhebels 33 ist ein Steuerzapfen 35 angeordnet, welcher entlang einer herzförmig ausgebildeten Führungsbahn 36 verfahrbar ist. Der Steuerzapfen 35 ist in einer Rastmulde 40 der Führungsbahn 36 lösbar verrastbar, wobei die Rastmulde 40 durch ein Anlegeteil 39 eines um die Drehachse 38 schwenkbar gelagerten Synchronisationselementes 37 gebildet ist. In der gezeigten Figur befindet sich das Anlegeteil 39 allerdings in einer Position, in welcher die Rastmulde 40 nicht gebildet wird. Beim Einfahren des Steuerzapfens 35 in die herzförmig ausgebildete Führungsbahn 36 wird aber das Synchronisationselement 37 mit dem Anlegeteil 39 im Gegenuhrzeigersinn verschwenkt, sodass der Steuerzapfen 35 in der Rastmulde 40 durch das Anlegeteil 39 lösbar verrastbar ist und die Schraubenfedern 14 gespannt sind. Ausgehend von der verriegelten Stellung des Steuerzapfens 35 in der Rastmulde 40 kann durch Überdrücken der Schublade 3 in Richtung Schließstellung die Verrastung des Steuerzapfens 35 gelöst werden, wobei das Synchronisationselement 37 mit dem Anlegeteil 39 in die in Fig. 4b gezeigte Position verschwenkt, die Führungsbahn 36 somit freigegeben und der Mitnehmer 16 über das Koppelelement 34 - welches am Steuerhebel 33 nur lose anliegt - durch die Kraft der Schraubenfedern 14 in Richtung (X) ausgestoßen wird. Da der Möbelantrieb 12 an der Schublade 3 befestigt ist, erfolgt die Ausstoßrichtung der Schublade 3 in einer zur Richtung (X) entgegengesetzten Richtung. Das lose Anliegen des Koppelelementes 34 am Steuerhebel 33 hat den Vorteil, dass die Schublade 3 in einer Schließstellung geöffnet werden kann, ohne dass dabei die Verriegelung des Steuerzapfens 40 aus der Rastmulde 40 gelöst wird. Das hier nicht gezeigte Anschlagelement der Korpusschiene 9 ist nämlich in der Schließstellung der Schublade 3 innerhalb des Mitnehmers 16 und einem schwenkbar gelagerten Fanghebel 31 aufgenommen, wobei das Fangelement 31 bei einer auf die Schublade 3 ausgeübten Zugbewegung in die in Fig. 4b gezeigte Lage einschwenkt und damit das Koppelelement der Korpusschiene 9 freigibt, woraufhin die Schublade 3 durch eine Person ungekoppelt in eine Offenstellung ausziehbar ist.

Aus den obigen Ausführungsbeispielen ergibt sich, dass der Möbelantrieb 12 sowohl als verriegelbare bzw. entriegelbare, federbelastete Ausstoßvorrichtung zum Ausstoßen eines bewegbaren Möbelteiles 3 in Öffnungsrichtung als auch als federbelastete Einzugsvorrichtung zum Einziehen des Möbelteiles 3 in eine Schließstellung ausgebildet werden kann. Diese beiden Funktionen können auch in einer gemeinsamen Baueinheit verwirklicht werden, wobei dieselbe Schraubenfeder 14 sowohl die Ausstoßvorrichtung als auch die Einzugsvorrichtung federbelastet.

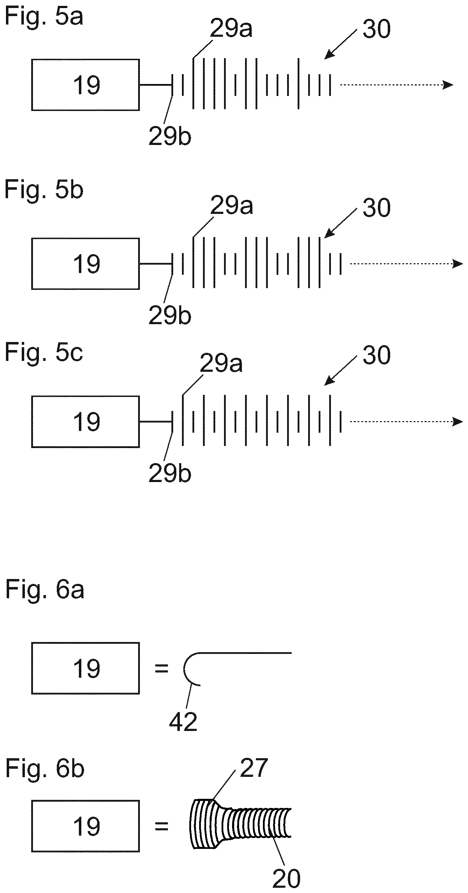

Fig. 5a-5c zeigen mögliche Ausführungsbeispiele von Abfolgen der Federwindungen 29a, 29b. Der Windungsabschnitt 30 ist mit dem Endabschnitt 19 der Schraubenfeder 14 einstückig verbunden. Gemäß Fig. 5a und ausgehend vom Endabschnitt 19 umfasst der Windungsabschnitt 30 zwei Federwindungen 29b mit kleinerem Durchmesser, vier Federwindungen 29a mit größerem Durchmesser, einer Federwindung 29b mit kleinerem Durchmesser, zwei Federwindungen 29a mit größerem Durchmesser, drei Federwindungen 29b mit kleinerem Durchmesser, etc.

Die Fig. 5b und Fig. 5c sind bezüglich der Abfolgen der Federwindungen 29a, 29b in gleicher Weise zu interpretieren. Diese beiden Figuren zeigen jeweils einen Windungsabschnitt 30, welcher entlang der Längsachse eine periodisch alternierende Abfolge von Federwindungen 29a mit größerem Durchmesser und Federwindungen 29b mit kleinerem Durchmesser aufweist.

Fig. 6a-6b zeigen mögliche Ausführungsbeispiele, wie der Endabschnitt 19 der Schraubenfeder 14 ausgebildet werden kann. Gemäß Fig. 6a ist der Endabschnitt 19 zur Befestigung der Schraubenfeder 14 als Öse ausgebildet, gemäß Fig. 6b als verjüngter Abschnitt 20 mit einer daran ausgebildeten Verdickung 27.

## Patentansprüche

1. Möbelantrieb (12) zum Antreiben eines bewegbaren Möbelteiles (3), umfassend:
- einen bewegbar gelagerten Mitnehmer (16) zum Antreiben des bewegbaren Möbelteiles (3),
- eine als Zugfeder ausgebildete Schraubenfeder (14) mit einer Längsachse (L) zur Kraftbeaufschlagung des Mitnehmers (16), wobei die Schraubenfeder (14) zwei Endabschnitte (19, 28) aufweist, zwischen denen ein Windungsabschnitt (30) mit Federwindungen (29a, 29b) angeordnet ist, wobei der Windungsabschnitt (30) der Schraubenfeder (14) zur Aufbringung einer Federkraft durch eine Bewegung des Mitnehmers (16) längenveränderlich ist, wobei der Windungsabschnitt (30) entlang der Längsachse (L) eine, vorzugsweise periodisch, alternierende Abfolge von Federwindungen (29a) mit größerem Durchmesser und Federwindungen (29b) mit kleinerem Durchmesser aufweist,
**dadurch gekennzeichnet, dass** die Federwindungen (29b) mit kleinerem Durchmesser - in radialer Richtung gesehen und in Ruhelage der Schraubenfeder (14) - zumindest teilweise innerhalb der Federwindungen (29a) mit größerem Durchmesser angeordnet sind.

2. Möbelantrieb nach Anspruch 1, **dadurch gekennzeichnet, dass** alternierend genau eine Federwindung (29a) mit größerem Durchmesser und genau eine Federwindung (29b) mit kleinerem Durchmesser unmittelbar aufeinanderfolgen.

3. Möbelantrieb nach Anspruch 1 oder 2, **dadurch gekennzeichnet, dass** zwischen zwei Federwindungen (29a) mit größerem Durchmesser zumindest eine oder mehrere Gruppen von Federwindungen (29b) mit kleinerem Durchmesser angeordnet sind.

4. Möbelantrieb nach einem der Ansprüche 1 bis 3, **dadurch gekennzeichnet, dass** zur Befestigung der Schraubenfeder (14) zumindest einer der beiden Endabschnitte (19, 28), vorzugsweise beide Endabschnitte (19, 28), einen verjüngten Abschnitt (20) mit einer daran angeordneten Verdickung (27) aufweist bzw. aufweisen.

5. Möbelantrieb nach einem der Ansprüche 1 bis 4, **dadurch gekennzeichnet, dass** der Möbelantrieb (12) zwei oder mehrere Schraubenfedern (14) zur Kraftbeaufschlagung des Mitnehmers (16) aufweist.

6. Möbelantrieb nach einem der Ansprüche 1 bis 5, **dadurch gekennzeichnet, dass** der Mitnehmer (16) mit dem bewegbaren Möbelteil (3) lösbar koppelbar ist.

7. Möbelantrieb nach einem der Ansprüche 1 bis 6, **dadurch gekennzeichnet, dass** der Mitnehmer (16) entlang einer Führung (20) bewegbar gelagert ist.

8. Möbelantrieb nach einem der Ansprüche 1 bis 7, **dadurch gekennzeichnet, dass** der Mitnehmer (16) mit einem verfahrbaren Schieber (25), vorzugsweise über zumindest einen Hebel (26), gelenkig verbunden ist.

9. Möbelantrieb nach einem der Ansprüche 1 bis 8, **dadurch gekennzeichnet, dass** der Mitnehmer (16) Teil einer Einzugsvorrichtung ist, durch welche das bewegbare Möbelteil (3) in die geschlossene Endlage relativ zu einem Möbelkorpus (2) einziehbar ist und/oder dass der Mitnehmer (16) Teil einer Ausstoßvorrichtung ist, durch welche das bewegbare Möbelteil (3) ausgehend von einer Schließstellung relativ zu einem Möbelkorpus (2) in eine Offenstellung ausstoßbar ist.

10. Möbelantrieb nach einem der Ansprüche 1 bis 9, **dadurch gekennzeichnet, dass** die Endabschnitte (19, 28) bei der als Zugfeder ausgebildeten Schraubenfeder (14) - bezogen auf die Gesamtlänge (43) der Schraubenfeder (14) - eine Länge zwischen 3% und 15%, vorzugsweise zwischen 5% und 10%, der Gesamtlänge (43) aufweisen.

11. Möbelantrieb nach einem der Ansprüche 1 bis 10, **dadurch gekennzeichnet, dass** der Windungsabschnitt (30) bei der als Zugfeder ausgebildeten Schraubenfeder (14) - bezogen auf die Gesamtlänge (43) der Schraubenfeder (14) - eine Länge von mindestens 50%, vorzugsweise mindestens 60%, der Gesamtlänge (43) aufweist, wobei vorzugsweise vorgesehen ist, dass der Windungsabschnitt (30) bei der als Zugfeder ausgebildeten Schraubenfeder (14) höchstens 80%, vorzugsweise höchstens 60%, der Gesamtlänge (43) der Schraubenfeder (14) beträgt.

12. Schubladenausziehführung, mit einer an einem Möbelkorpus (2) zu befestigenden Korpusschiene (9), zumindest einer relativ zur Korpusschiene (9) verschiebbar gelagerten Ladenschiene (11) und mit einem Möbelantrieb (12) zum Bewegen der Ladenschiene (11) nach einem der Ansprüche 1 bis 11.

13. Schubladenausziehführung nach Anspruch 12, **dadurch gekennzeichnet, dass** die zumindest eine Ladenschiene (11) gegen Ende der Schließbewegung mit dem Mitnehmer (16) des Möbelantriebes (12) lösbar kuppelbar und durch die Kraft der Schraubenfeder (14) in die geschlossene Endlage einziehbar ist.

14. Schubladenausziehführung nach Anspruch 12 oder 13, **dadurch gekennzeichnet, dass** die zumindest eine Ladenschiene (11) ausgehend von der geschlossenen Stellung über den Mitnehmer (16) des Möbelantriebes (12) und durch die Kraft der Schraubenfeder (14) in eine Offenstellung ausstoßbar ist.

15. Schublade mit einem Möbelantrieb nach einem der Ansprüche 1 bis 11 oder mit einer Schubladenausziehführung nach einem der Ansprüche 12 bis 14.

## Claims

1. A furniture drive (12) for driving a movable furniture part (3), including:
- a movably-mounted entrainment member (16) for driving the movable furniture part (3),
- a helical spring (14) in the form of a tension spring having a longitudinal axis (L) for applying a force to the entrainment member (16), wherein the helical spring (14) has two end portions (19, 28) between which a winding section (30) with spring turns (29a, 29b) is arranged, wherein the winding section (30) of the helical spring (14), for applying a spring force, is variable in length by a movement of the entrainment member (16), wherein the winding section (30) includes a, preferably periodically, alternating sequence of spring turns (29a) having a larger diameter and spring turns (29b) having a smaller diameter along the longitudinal axis (L),
**characterized in that** the spring turns (29b) having a smaller diameter - seen in radial direction and in the rest position of the helical spring (14) - are at least partially arranged within the spring turns (29a) having a larger diameter.

2. The furniture drive according to claim 1, **characterized in that** exactly one spring turn (29a) having a larger diameter and exactly one spring turn (29b) having a smaller diameter immediately follow each other.

3. The furniture drive according to claim 1 or 2, **characterized in that** between two spring turns (29a) having a larger diameter, at least one or more groups of spring turns (29b) having a smaller diameter is or are arranged.

4. The furniture drive according to one of the claims 1 to 3, **characterized in that** for fastening the helical spring (14), at least one of both end sections (19, 28), preferably both end sections (19, 28), includes or include a tapered section (20) with a thickening (27) arranged thereon.

5. The furniture drive according to one of the claims 1 to 4, **characterized in that** the furniture drive (12) includes two or more helical springs (14) for applying a force to the entrainment member (16).

6. The furniture drive according to one of the claims 1 to 5, **characterized in that** the entrainment member (16) can be releasably coupled to the movable furniture part (3).

7. The furniture drive according to one of the claims 1 to 6, **characterized in that** the entrainment member (16) is movably supported along a guide (20).

8. The furniture drive according to one of the claims 1 to 7, **characterized in that** the entrainment member (16) is hingedly connected to a displaceable slider (25), preferably by at least one lever (26).

9. The furniture drive according to one of the claims 1 to 8, **characterized in that** the entrainment member (16) forms part of a retraction device by which the movable furniture part (3) can be retracted into the closed end position relative to a furniture carcass (2) and/or the entrainment member (16) forms part of an ejection device by which the movable furniture part (3) can be ejected, starting from a closed position relative to the furniture carcass (2), into an open position.

10. The furniture drive according to one of the claims 1 to 9, **characterized in that** the end portions (19, 28) of the helical spring (14) in the form of the tension spring - relating to the overall length (43) of the helical spring (14) - have a length of between 3% and 15%, preferably between 5% und 10%, of the overall length (43).

11. The furniture drive according to one of the claims 1 to 10, **characterized in that** the winding section (30) of the helical spring (14) in the form of the tension spring - relating to the overall length (43) of the helical spring (14) - have a length of at least 50%, preferably at least 60%, of the overall length (43), wherein it is preferably provided that the winding section (30) of the helical spring (14) in the form of the tension spring is at most 80%, preferably at most 60%, of the overall length (43) of the helical spring (14).

12. A drawer pull-out guide with a carcass rail (9) to be fixed to a furniture carcass (2), at least one drawer rail (11) which is displaceable relative to the carcass rail (9) and with a furniture drive (12) according to one of the claims 1 to 11 for moving the drawer rail (11).

13. The drawer pull-out guide according to claim 12, **characterized in that** the at least one drawer rail (11), at the end of the closing movement, can be coupled to the entrainment member (16) of the furniture drive (12) and can be pulled into the closed end position by the force of the helical spring (14).

14. The drawer pull-out guide according to claim 12 or 13, **characterized in that** the at least one drawer rail (11), starting from the closed position, can be ejected into an open position by the entrainment member (16) and by the force of the helical spring (14).

15. A drawer with a furniture drive according to one of the claims 1 to 11 or with a drawer pull-out guide according to one of the claims 12 to 14.

## Revendications

1. Entraînement de meuble (12) destiné à entraîner une partie de meuble (3) mobile, comprenant :
- un organe d'entraînement (16), supporté de façon mobile, destiné à l'entraînement de la partie de meuble (3) mobile,
- un ressort hélicoïdal (14) constitué en tant que ressort de traction avec un axe longitudinal (L) destiné à exercer une force sur l'organe d'entraînement (16), le ressort hélicoïdal (14) présentant deux tronçons d'extrémité (19, 28) entre lesquels est disposé un tronçon de spires (30) avec des spires de ressort (29a, 29b), le tronçon de spires (30) du ressort hélicoïdal (14) étant variable en longueur par un mouvement de l'organe d'entraînement (16) pour l'application d'une force de ressort, le tronçon de spires (30) présentant, le long de l'axe longitudinal (L), de préférence de façon périodique, une succession en alternance de spires de ressort (29a) ayant un diamètre plus grand et de spires de ressort (29b) ayant un diamètre plus petit,
**caractérisé en ce que** les spires de ressort (29b) ayant un diamètre plus petit sont - vu dans la direction radiale et dans la position de repos du ressort hélicoïdal (14) - disposées au moins partiellement à l'intérieur des spires de ressort (29a) ayant un diamètre plus grand.

2. Entraînement de meuble selon la revendication 1, **caractérisé en ce que**, de façon alternée, précisément une spire de ressort (29a) ayant un diamètre plus grand et précisément une spire de ressort (29b) ayant un diamètre plus petit se suivent immédiatement.

3. Entraînement de meuble selon la revendication 1 ou 2, **caractérisé en ce que**, entre deux spires de ressort (29a) ayant un diamètre plus grand, il y a au moins un ou plusieurs groupes de spires de ressort (29b) ayant un diamètre plus petit.

4. Entraînement de meuble selon l'une des revendications 1 à 3, **caractérisé en ce que**, pour la fixation du ressort hélicoïdal (14), au moins un des deux tronçons d'extrémité (19, 28), de préférence les deux tronçons d'extrémité (19, 28), présente ou respectivement présentent un tronçon (20) effilé sur lequel est disposé un épaississement (27).

5. Entraînement de meuble selon l'une des revendications 1 à 4, **caractérisé en ce que** l'entraînement de meuble (12) présente deux ou plusieurs ressorts hélicoïdaux (14) destinés à exercer une force sur l'organe d'entraînement (16).

6. Entraînement de meuble selon l'une des revendications 1 à 5, **caractérisé en ce que** l'organe d'entraînement (16) peut être couplé de façon détachable à la partie de meuble (3) mobile.

7. Entraînement de meuble selon l'une des revendications 1 à 6, **caractérisé en ce que** l'organe d'entraînement (16) est supporté de façon mobile le long d'un guidage (20).

8. Entraînement de meuble selon l'une des revendications 1 à 7, **caractérisé en ce que** l'organe d'entraînement (16) est, de préférence par le biais d'au moins levier (26), raccordé de façon articulé à un chariot (25) pouvant être déplacé.

9. Entraînement de meuble selon l'une des revendications 1 à 8, **caractérisé en ce que** l'organe d'entraînement (16) fait partie d'un dispositif de rentrage par lequel la partie de meuble (3) mobile peut être rentrée dans la position extrême fermée par rapport à un corps de meuble (2) et/ou **en ce que** l'organe d'entraînement (16) fait partie d'un dispositif de poussée par lequel la partie de meuble (3) peut, par rapport à un corps de meuble (2), être poussée à partir d'une position de fermeture en direction d'une position d'ouverture.

10. Entraînement de meuble selon l'une des revendications 1 à 9, **caractérisé en ce que** les tronçons d'extrémité (19, 28), dans le cas du ressort hélicoïdal (14) constitué en tant que ressort de traction présentent- par rapport à la longueur totale (43) du ressort hélicoïdal (14) - une longueur comprise entre 3 % et 15 %, de préférence entre 5 % et 10 %, de la longueur totale (43).

11. Entraînement de meuble selon l'une des revendications 1 à 10, **caractérisé en ce que** le tronçon de spires (30), dans le cas du hélicoïdal (14) constitué en tant que ressort de traction présente - par rapport à la longueur totale (43) du ressort hélicoïdal (14) - une longueur d'au moins 50 %, de préférence d'au moins 60 %, de la longueur totale (43), étant de préférence prévu que le tronçon de spires (30), dans le cas du ressort hélicoïdal (14) constitué en tant que ressort de traction, est au maximum égal à 80 %, de préférence au maximum égal à 60 %, de la longueur totale (43) du ressort hélicoïdal (14).

12. Guidage de sortie de tiroir, avec un rail de corps (9) à fixer sur corps de meuble (2), avec au moins une glissière de tiroir (11) supportée de façon coulissante par rapport au rail de corps (9), et avec un entraînement de meuble (12) destiné à déplacer la glissière de tiroir (11) selon l'une des revendications 1 à 11.

13. Guidage de sortie de tiroir selon la revendication 12, **caractérisé en ce que** la glissière de tiroir (11) au moins au nombre de un peut être couplée de façon détachable à l'organe d'entraînement (16) de l'entraînement de meuble (12) vers la fin du mouvement de fermeture et peut être rentrée dans la position extrême fermée par la force du ressort hélicoïdal (14).

14. Guidage d'ouverture de tiroir selon la revendication 12 ou 13, **caractérisé en ce que**, à partir de la position fermée, la glissière de tiroir (11) au moins au nombre de un peut être poussée dans une position ouverte par le biais de l'organe d'entraînement (16) de l'entraînement de meuble (12) et par la force du ressort hélicoïdal (14).

15. Tiroir avec un entraînement de meuble (12) selon l'une des revendications 1 à 11 ou avec un guidage de sortie de tiroir un selon l'une des revendications 12 à 14.
